(19)

Europäisches Patentamt
European Patent Office
Office européen des brevets

(11)   **EP 3 693 746 B1**

(12)                    **EUROPEAN PATENT SPECIFICATION**

(45) Date of publication and mention
of the grant of the patent:
**28.09.2022   Bulletin 2022/39**

(21) Application number: **19211140.9**

(22) Date of filing: **25.11.2019**

(51) International Patent Classification (IPC):
**G01P 5/24** *(2006.01)*        **G01P 13/02** *(2006.01)*

(52) Cooperative Patent Classification (CPC):
**G01P 5/245; G01P 13/025**

(54) **ACOUSTIC AIR DATA SYSTEM**

**AKUSTISCHES LUFTDATENSYSTEM**

**SYSTÈME DE DONNÉES D'AIR ACOUSTIQUE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.02.2019   US 201916271021**

(43) Date of publication of application:
**12.08.2020   Bulletin 2020/33**

(73) Proprietor: **ROSEMOUNT AEROSPACE INC.
Burnsville, MN 55306-4898 (US)**

(72) Inventors:
• **ELL, Todd A.
Savaga, MN 55378 (US)**
• **HULL, Richard
Kissimmee, FL 34744 (US)**

(74) Representative: **Dehns
St. Bride's House
10 Salisbury Square
London EC4Y 8JD (GB)**

(56) References cited:
**EP-A1- 3 567 374      US-A- 3 222 926
US-B1- 10 101 443**

**Description**

BACKGROUND

This disclosure relates generally to air data systems, and more particularly to acoustic air data systems.
Certain vehicles, such as aircraft, missiles, high speed ground vehicles, or other vehicles have incorporated air data systems that calculate air data outputs based on measured parameters collected from various sensors positioned about the vehicle. For instance, many aircraft air data systems utilize pneumatic air data probes (e.g., pitot and/or pitot-static probes) that measure pneumatic pressure of oncoming airflow about the aircraft exterior to generate aircraft air data outputs, such as true airspeed, calibrated airspeed, Mach number, altitude, angle of attack, angle of sideslip, or other air data parameters. Traditional angle of attack sensors typically work by aligning a rotating vane with local airflow about the aircraft exterior. The angle of the rotating vane is compared to a reference line of the aircraft, such as a horizontal reference line of the aircraft aligned with, e.g., a chord of a wind of the aircraft, to produce a measured angle of attack.
Traditional pneumatic and rotating vane sensors, however, can be susceptible to failure modes caused by icing and/or particulates within the airflow (e.g., volcanic ash). Ice buildup, for example, can prevent or inhibit rotation of an angle of attack vane, thereby decreasing accuracy of angle of attack measurements. Icing conditions and/or particulate buildup within a pneumatic pitot and/or pitot-static probe can similarly degrade performance of the pneumatic probe to accurately measure pressures of the oncoming airflow, thereby negatively impacting performance of the air data system.
US 3 222 926 relates to an air mass relative motion meter. US 10 101 443 relates to airframe-embedded ultrasonic transducers.

SUMMARY

In one example, an acoustic air data sensing system is defined in claim 1 and includes an acoustic transmitter, a plurality of acoustic receivers, and control circuitry. The acoustic transmitter is located to transmit an acoustic signal into airflow about an exterior of a vehicle. Each of the plurality of acoustic receivers is located at a respective angle from a wind angle reference line and a respective distance from the acoustic transmitter to receive the acoustic signal transmitted by the acoustic transmitter. The control circuitry is configured to determine respective times of flight of the acoustic signal from the acoustic transmitter to each of the plurality of acoustic receivers, and determine signal velocities of the acoustic signal to each of the plurality of acoustic receivers based on the respective distances and respective times of flight of the acoustic signal from the acoustic transmitter to the acoustic receivers. The control circuitry is further configured to determine planar components of a velocity of the airflow about the exterior of the vehicle based on the signal velocities and the respective angles of the acoustic receivers from the wind angle reference line. The control circuitry is further configured to determine a speed of sound in the airflow about the exterior of the vehicle based on the signal velocities and the respective angles of the acoustic receivers from the wind angle reference line, determine one or more of true airspeed and relative wind angle of the airflow about the exterior of the vehicle based on the planar components of the velocity of the airflow about the exterior of the vehicle, and output the one or more of the true airspeed and the relative wind angle for operational control of the vehicle.
In another example, a method is defined in claim 7 and includes transmitting, by an acoustic transmitter of an acoustic air data sensor located on a vehicle, an acoustic signal into airflow about an exterior of the vehicle. The method further includes receiving the acoustic signal at a plurality of acoustic receivers of the acoustic air data sensor. Each of the plurality of acoustic receivers is located at a respective angle from a wind angle reference line and a respective distance from the acoustic transmitter. The method further includes determining respective times of flight of the acoustic signal from the acoustic transmitter to each of the plurality of acoustic receivers, determining signal velocities of the acoustic signal to each of the plurality of acoustic receivers based on the respective distances and respective times of flight of the acoustic signal from the acoustic transmitter to the acoustic receivers, determining planar components of a velocity of the airflow about the exterior of the vehicle based on the signal velocities and the respective angles of the acoustic receivers from the wind angle reference line, and determining a speed of sound in the airflow about the exterior of the vehicle based on the signal velocities and the respective angles of the acoustic receivers from the wind angle reference line. The method further includes determining one or more of true airspeed and relative wind angle of the airflow about the exterior of the vehicle based on the planar components of the velocity of the airflow about the exterior of the vehicle, and outputting the one or more of the true airspeed and the relative wind angle for operational control of the vehicle.

BRIEF DESCRIPTION OF THE DRAWINGS

FIG. 1 is a top-down view of an acoustic air data sensing system disclosed herein; and.

FIG. 2 is a schematic block diagram illustrating further details of the acoustic air data sensing system to produce air data outputs.

DETAILED DESCRIPTION

As described herein, an acoustic air data sensing system includes acoustic receivers that are located at various known distances and angles from an acoustic transmitter. The acoustic transmitter produces an acoustic signal that is influenced by airflow about the exterior of a vehicle as the signal propagates to the acoustic receivers. The effects of sound propagation speed between the transmitter and the receivers is separated from airflow velocity based on measured times of flight of the acoustic signal and the known distances and angles between the transmitter and each of the acoustic receivers. Accordingly, the determined airflow velocity information is used to generate air data parameters (e.g., true airspeed, relative wind angle, Mach number, and static air temperature) as well as a direct measurement of the speed of sound through the airflow about the vehicle exterior. As such, an acoustic air data sensor implementing techniques of this disclosure can effectively produce air data parameters that are usable for operational control of the vehicle without requiring direct pressure measurements or angular rotation of a vane within the oncoming airflow.

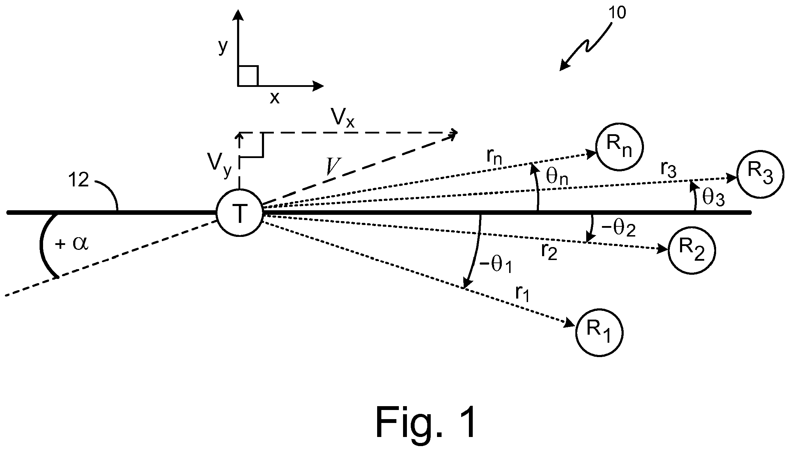

FIG. 1 is a top-down view of acoustic air data sensing system 10 including acoustic transmitter T and acoustic receivers $R_1$, $R_2$, $R_3$, and $R_n$. Acoustic air data sensing system 10 can be mounted on and/or otherwise incorporated into an exterior of a vehicle, such that an acoustic signal transmitted by transmitter T is influenced by airflow over the exterior of the vehicle during propagation of the acoustic signal between transmitter T and each of receivers $R_1$, $R_2$, $R_3$, and $R_n$. While the examples provided herein are described with respect to acoustic air data sensing system 10 mounted on or otherwise incorporated into an aircraft, it should be understood that the techniques of this disclosure are applicable to any vehicle for which air data parameters are to be generated for, e.g., operational control of the vehicle. Examples of such vehicles to which acoustic air data sensing system 10 can be mounted on and/or incorporated into can include, e.g., air vehicles (e.g., aircraft, unmanned aerial vehicles, rotorcraft, drones, missiles, or other air vehicles), ground vehicles (e.g., automobiles, trains, rocket sleds, or other ground vehicles), or any other vehicle for which air data parameters, such as true airspeed, relative wind angle, Mach number, and static air temperature are to be generated for operational control of the vehicle.

In some examples, acoustic air data sensing system 10 is incorporated into a mounting plate or other structure configured to be flush-mounted with the exterior of the aircraft, such that edges of the mounting plate and the acoustic transmitter and receivers are aligned with (i.e., flush with) the exterior surface of the aircraft. Mounting of acoustic air data sensing system 10 flush with the exterior surface of the aircraft can reduce or eliminate aerodynamic and acoustic effects caused by the interface of the oncoming airflow with the mounting plate or the acoustic transmitter or receivers themselves. In other examples, any one or more of acoustic transmitter T and receivers $R_1$, $R_2$, $R_3$, and $R_n$ can be integrated into the exterior of the aircraft skin (e.g., and flush with the aircraft exterior skin) without the use of a mounting plate. In yet other examples, the mounting plate and/or the acoustic transmitter T and receivers $R_1$, $R_2$, $R_3$, and $R_n$ of acoustic air data sensing system 10 can be mounted on the exterior of the aircraft such that edges of the mounting plate or any one or more of transmitter T and receivers $R_1$, $R_2$, $R_3$, and $R_n$ are not flush with the exterior of the aircraft. In such examples, aerodynamic and/or acoustic effects of the non-flush interface of the mounting plate, transmitter T, and/or receivers $R_1$, $R_2$, $R_3$, and $R_n$ can be characterized (e.g., in a wind tunnel) and compensated for during the air data parameter computations.

Acoustic transmitter T can be a piezoelectric speaker, a cone speaker, a micro-electro-mechanical systems (MEMS) speaker, or other electric-to-acoustic transducer. Acoustic receivers $R_1$, $R_2$, $R_3$, and $R_n$ can be microphones including MEMS microphones, condenser microphones, or other acoustic-to-electric transducers. While the example of FIG. 1 illustrates four separate receivers (i.e., $R_1$, $R_2$, $R_3$, and $R_n$), it should be understood that the reference "n" represents an arbitrary number, such that acoustic air data sensing system 10 can include any number of acoustic receivers $R_1$-$R_n$.

As illustrated in FIG. 1, each of acoustic receivers $R_1$, $R_2$, $R_3$, and $R_n$ is located at a respective radial distance $r_1$, $r_2$, $r_3$, and $r_n$ from transmitter T. That is, acoustic receiver $R_1$ is located at radial distance $r_1$ from transmitter T, acoustic receiver $R_2$ is located at radial distance $r_2$ from transmitter T, acoustic receiver $R_3$ is located at radial distance $r_3$ from transmitter T, and acoustic receiver $R_n$ is located at radial distance $r_n$ from transmitter T. The radial distances $r_1$, $r_2$, $r_3$, and $r_n$ can be the same or different distances.

Each of acoustic receivers $R_1$, $R_2$, $R_3$, and $R_n$ is located at a respective angle $\theta_1$, $\theta_2$, $\theta_3$, and $\theta_n$ with respect to wind angle reference line 12. That is, acoustic receiver $R_1$ is located at angle $-\theta_1$ (the negative indicating a directional component with respect to wind angle reference line 12), acoustic receiver $R_2$ is located at angle $-\theta_2$ with respect to wind angle reference line 12, acoustic receiver $R_3$ is located at angle $\theta_3$ with respect to wind angle reference line 12, and acoustic receiver Rn is located at angle $\theta_n$ with respect to wind angle reference line 12. In some examples, each of acoustic receivers $R_1$, $R_2$, $R_3$, and $R_n$ is located at a different angle with respect to wind angle reference line 12. In other examples, any two or more of acoustic receivers $R_1$, $R_2$, $R_3$, and $R_n$ can be located at a same angle, but at different radial distances from transmitter T.

Wind angle reference line 12 is a reference line of the aircraft corresponding to one of an angle of attack and an angle of sideslip of the aircraft upon which acoustic air data sensing system 10 is mounted. For instance, acoustic air data sensing system 10 can be mounted on an aircraft in a location that enables acoustic air data sensing system 10 to measure the relative wind angle corresponding to angle of attack of the aircraft, such as on a side of the aircraft. In such examples, wind angle reference line 12 is a reference line of the aircraft corresponding to aircraft angle of attack, such as a chord of a wing of the aircraft corresponding to a known (i.e., reference) aircraft angle of attack (e.g., zero degrees angle of attack). In other examples, acoustic air data sensing system 10 can be mounted on an aircraft in a location that enables acoustic air data sensing system 10 to measure the relative wind angle corresponding to an angle of sideslip of the aircraft, such as on a top or bottom of the aircraft. In such examples, wind angle reference line 12 is a reference line of the aircraft corresponding to aircraft angle of sideslip, such as a line extending between the nose and the tail of the aircraft corresponding to a known (i.e., reference) aircraft angle of sideslip (e.g., zero degrees angle of sideslip).

In some examples, multiple acoustic air data sensors 10 can be mounted on or otherwise incorporated into the aircraft, such as at multiple orientations and/or locations to provide relative wind angle measurements corresponding to multiple wind angle reference lines 12. For instance, in certain examples, a first acoustic air data sensing system 10 can be mounted on the aircraft in a first location (e.g., a side of the aircraft) that enables the first acoustic air data sensing system 10 to measure the relative wind angle corresponding to angle of attack of the aircraft, and a second acoustic air data sensing system 10 can be mounted on the aircraft in a second location (e.g., a top or bottom of the aircraft) that enables the second acoustic air data sensing system 10 to measure the relative wind angle corresponding to angle of sideslip of the aircraft. Accordingly, such multiple acoustic air data sensors 10 can provide air data parameter measurements corresponding to both angle of attack and angle of sideslip for operational control of the aircraft.

As illustrated in FIG. 1, each of acoustic receivers $R_1$, $R_2$, $R_3$, and $R_n$ can be located downstream (e.g., aft) of acoustic transmitter T, though in other examples, any one or more of acoustic receivers $R_1$, $R_2$, $R_3$, and $R_n$ can be located upstream (e.g., forward) of acoustic transmitter T. Locating receivers $R_1$, $R_2$, $R_3$, and $R_n$ downstream of transmitter T, rather than upstream of transmitter T, can help to mitigate airflow boundary layer velocity effects that bend sound waves traveling upstream in the airflow in a direction that is away from the exterior surface of the aircraft (i.e., the mounting surface of acoustic air data sensing system 10). Such bending (i.e., away from the aircraft skin) can attenuate the acoustic signal at the upstream receivers, thereby decreasing the signal-to-noise ratio at the upstream receivers and causing decreased accuracy of air data parameter computations that are based on the acoustic signal received at the upstream receivers. The same airflow boundary layer velocity effects, however, also cause bending of sound waves traveling downstream in the airflow in a direction that is toward the exterior surface of the aircraft. Such bending (i.e., toward the aircraft skin) can increase the strength of the acoustic signal received at the downstream receivers, thereby increasing the signal-to-noise ratio at the downstream receivers. Accordingly, in certain examples, such as the example of FIG. 1, each of the receivers $R_1$, $R_2$, $R_3$, and $R_n$ can be located downstream (i.e., aft) of transmitter T to alleviate the shadowing effect (i.e., signal attenuation) at upstream receivers that is exacerbated with greater air velocities.

In addition, as illustrated in FIG. 1, receivers $R_1$, $R_2$, $R_3$, and $R_n$ can be located such that no two of acoustic receivers $R_1$, $R_2$, $R_3$, and $R_n$ are directly opposing receivers. That is, receivers $R_1$, $R_2$, $R_3$, and $R_n$ can be located such that no straight line can be drawn through any two of receivers $R_1$, $R_2$, $R_3$, and $R_n$ and transmitter T, with transmitter T located between the two receivers $R_1$, $R_2$, $R_3$, and $R_n$.

In operation, acoustic air data sensing system 10 experiences airflow as it passes over the aircraft exterior, which is illustrated in the example of FIG. 1 as airflow velocity vector V. The direction of travel of airflow velocity vector V forms relative wind angle $\alpha$ with respect to wind angle reference line 12. The magnitude of airflow velocity vector V represents the speed of the airflow (or true airspeed) of the airflow about the aircraft exterior.

Acoustic transmitter T emits an acoustic signal into the airflow about the aircraft exterior. The acoustic signal, affected by the airflow velocity vector V, propagates to each of acoustic receivers $R_1$, $R_2$, $R_3$, and $R_n$, which receive the acoustic signal at varying times. As is further described below, acoustic air data sensing system 10 includes control circuitry that determines times of flight of the emitted acoustic signal to each of receivers $R_1$, $R_2$, $R_3$, and $R_n$ based on the time at which the acoustic signal is transmitted from acoustic transmitter T and the various times at which the acoustic signal is received at the receivers $R_1$, $R_2$, $R_3$, and $R_n$. The control circuitry determines signal velocities of the acoustic signal to each of the receivers $R_1$, $R_2$, $R_3$, and $R_n$ based on the times of flight and the known distances $r_1$, $r_2$, $r_3$, and $r_n$ between acoustic transmitter T and the acoustic receivers $R_1$, $R_2$, $R_3$, and $R_n$.

Using the determined signal velocities and the known angles $\theta_1$, $\theta_2$, $\theta_3$, and $\theta_n$ of the respective acoustic receivers $R_1$, $R_2$, $R_3$, and $R_n$, the control circuitry determines planar components $V_x$ and $V_y$ of the airflow velocity vector V, as well as the speed of sound in the airflow (i.e., a direct measurement of the speed of sound in the air about the aircraft exterior). Planar components $V_x$ and $V_y$ represent the component vectors of airflow velocity vector V in each of the directions defined by perpendicular unit vectors x and y defining a planar coordinate axis. The direction of unit vector x, as illustrated in FIG. 1, is parallel with wind angle reference line 12. The direction of unit vector y is perpendicular to the wind angle reference line 12 (and hence the unit vector x).

As is further described below, acoustic air data sensing system 10 determines air data parameter outputs, including one or more of true airspeed (TAS) of the airflow and the relative wind angle of the airflow (i.e., $\alpha$) based on the planar components $V_x$ and $V_y$ of the airflow velocity vector V. Acoustic air data sensing system 10 can further determine air data parameter outputs including a Mach number of the airflow and a static air temperature (SAT) of the airflow based on the planar components $V_x$ and $V_y$ and the measured speed of sound in the airflow. The air data parameter outputs are transmitted to one or more consuming systems, such as an aircraft flight management system (FMS), autoflight control system (AFCS), electronic flight instrument system (EFIS), or other consuming systems, which use the received air data parameter outputs for operational control of the aircraft.

Accordingly, acoustic air data sensing system 10, implementing techniques of this disclosure, determines aircraft air data parameters, such as TAS, Mach number, angle of attack and/or angle of sideslip, and SAT, based on propagation of an emitted acoustic signal that is received at acoustic receivers $R_1$, $R_2$, $R_3$, and $R_n$. The acoustic receivers $R_1$, $R_2$, $R_3$, and $R_n$, in some examples, are each located aft of transmitter T, thereby enabling accurate measurements and air data parameter calculations even at relatively high wind velocities, such as velocities above Mach 0.2. The acoustic air data sensing system 10 described herein can therefore provide air data parameter outputs that are usable for operational control of the aircraft and which are determined based on measurements that may be less susceptible to common failure modes of traditional pneumatic and rotating vane sensors, such as ice accumulation and/or the buildup of particulates such as volcanic ash.

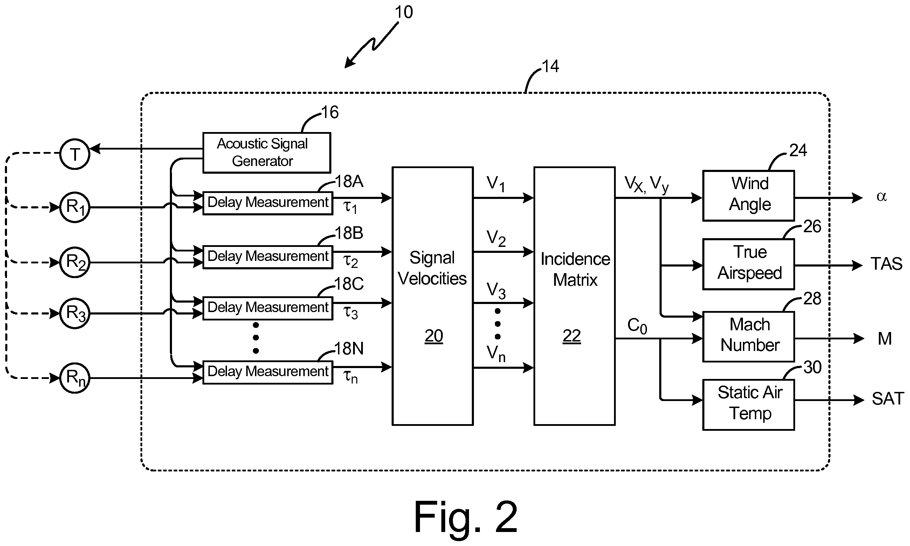

FIG. 2 is a schematic block diagram illustrating further details of acoustic air data sensing system 10 to produce air data outputs. As illustrated in FIG. 2, acoustic air data sensing system 10 further includes control circuitry 14. Control circuitry 14 includes acoustic signal generator 16, delay measurement circuitry 18A-18N, signal velocity circuitry 20, incidence matrix circuitry 22, wind angle circuitry 24, true airspeed circuitry 26, Mach number circuitry 28, and static air temperature circuitry 30.

While the example of FIG. 2 illustrates and describes control circuitry 14 as including various circuit components, it should be understood that in some examples, control circuitry 14 and/or any one or more components of control circuitry 14 can be implemented in hardware, software, or combinations of hardware and software. For instance, control circuitry 14 can take the form of and/or include one or more processors and computer-readable memory encoded with instructions that, when executed by the one or more processors, cause acoustic air data sensing system 10 to operate in accordance with techniques described herein.

Examples of the one or more processors can include any one or more of a microprocessor, a digital signal processor (DSP), an application specific integrated circuit (ASIC), a field-programmable gate array (FPGA), or other equivalent discrete or integrated logic circuitry. Computer-readable memory of control circuitry 14 can be configured to store information within control circuitry 14 during operation. The computer-readable memory can be described, in some examples, as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). Computer-readable memory of control circuitry 14 can include volatile and non-volatile memories. Examples of volatile memories can include random access memories (RAM), dynamic random access memories (DRAM), static random access memories (SRAM), and other forms of volatile memories. Examples of non-volatile memories can include magnetic hard discs, optical discs, floppy discs, flash memories, or forms of electrically programmable memories (EPROM) or electrically erasable and programmable (EEPROM) memories.

As illustrated in FIG. 2, acoustic signal generator 16 provides an electrical control signal to transmitter T representing a waveform of an acoustic signal to be transmitted by transmitter T. Acoustic signal generator 16 also provides the electrical signal representing the waveform of the acoustic signal to be transmitted as a reference signal to delay measurement circuitry 18A-18N. The waveform can take the form of an acoustic pulse, an oscillating acoustic signal, a broadband acoustic signal, a random source acoustic signal, or other form of acoustic signal.

Transmitter T, in response to receiving the electrical control signal from acoustic signal generator 16, transmits the acoustic signal into the airflow about the aircraft exterior. The acoustic signal propagates through the airflow about the aircraft exterior and is received by each of acoustic receivers $R_1$, $R_2$, $R_3$, and $R_n$, as is schematically illustrated by dashed lines in the example of FIG. 2.

Acoustic receivers $R_1$, $R_2$, $R_3$, and $R_n$ receive the acoustic signal at varying times. Each of receivers $R_1$, $R_2$, $R_3$, and $R_n$ provides an electrical signal to a corresponding one of delay measurement circuitry 18A-18N, the electrical signal representing the waveform of the received acoustic signal. Each of delay measurement circuitry 18A-18N determines the time delay representing the time of flight of the acoustic signal emitted by transmitter T to the respective one of receivers $R_1$, $R_2$, $R_3$, and $R_n$, and outputs the respective time delay to signal velocities circuitry 20. For instance, as illustrated in FIG. 2, delay measurement circuitry 18A outputs time of flight (or time delay) $\tau_1$ to signal velocities circuitry 20, the time of flight $\tau_1$ representing the time of flight of the acoustic signal from transmitter T to acoustic receiver $R_1$. Delay measurement circuitry 18B outputs time of flight $\tau_2$ to signal velocities circuitry 20, the time of flight $\tau_2$ representing

the time of flight of the acoustic signal from transmitter T to acoustic receiver $R_2$. Delay measurement circuitry 18C outputs time of flight $\tau_3$ to signal velocities circuitry 20, the time of flight $\tau_3$ representing the time of flight of the acoustic signal from transmitter T to acoustic receiver $R_3$. Delay measurement circuitry 18N outputs time of flight $\tau_n$ to signal velocities circuitry 20, the time of flight $\tau_n$ representing the time of flight of the acoustic signal from transmitter T to acoustic receiver $R_n$.

Delay measurement circuitry 18A-18N can determine the times of flight $\tau_1$, $\tau_2$, $\tau_3$, and $\tau_n$ as the difference in time between the reference signal received from acoustic signal generator 16 and the receiver signal received from a respective one of acoustic receivers $R_1$, $R_2$, $R_3$, and $R_n$, such as a difference in time between time-valued locations of one or more identified features of the signals, such as one or more of a maximum, a minimum, a zero-crossing, or other identified features. In some examples, each of delay measurement circuitry 18A-18N determines the time of flight using cross-correlation operations to determine a correlation signal between the reference signal received from acoustic signal generator 16 and the receiver signal received from the corresponding one of receivers $R_1$, $R_2$, $R_3$, and $R_n$. In such examples, delay measurement circuitry 18A-18N can identify the respective time of flight as the time shift corresponding to a maximum of the correlation signal generated by the cross-correlation operations.

In some examples, delay measurement circuitry 18A-18N determines that a receiver signal from the corresponding one of receivers $R_1$, $R_2$, $R_3$, and $R_n$ is not received or is otherwise unsuitable for use with the air data parameter output computations, such as when a failure mode of one of receivers $R_1$, $R_2$, $R_3$, and $R_n$ prevents the corresponding receiver from receiving the acoustic signal emitted by transmitter T, or when an acoustic noise burst or other acoustic signal interferes with the acoustic signal emitted by transmitter T. For instance, delay measurement circuitry 18A-18N can determine that the receiver signal is not received or is otherwise unusable in response to determining that a time delay between the receiver signal and the reference signal is greater than (or equal to) a threshold time delay and/or a maximum of the correlation signal between the receiver signal and the reference signal is less than (or equal to) a threshold correlation value. In such examples, delay measurement circuitry 18A-18N can output, as the corresponding one of time of flight $\tau_1$, $\tau_2$, $\tau_3$, and $\tau_n$, a value of zero or other defined value indicating that the receiver signal was not received or is otherwise unusable for air data output computations.

As illustrated in FIG. 2, signal velocities circuitry 20 receives times of flight $\tau_1$-$\tau_n$, from delay measurement circuitry 18A-18N. Signal velocities circuitry 20 determines signal velocities of the acoustic signal from transmitter T to each of acoustic receivers $R_1$-$R_n$ based on the received times of flight $\tau_1$-$\tau_n$ and the known distances $r_1$-$r_n$ (FIG. 1) between acoustic transmitter T and each of acoustic receivers $R_1$-$R_n$. For instance, signal velocities circuitry 20 can divide the respective distances $r_1$-$r_n$ by the respective times of flight $\tau_1$-$\tau_n$ to determine pulse velocities $V_1$-$V_n$. For instance, signal velocities circuitry 20 can divide distance $r_1$ by time of flight $\tau_1$ to determine signal velocity $V_1$ of the acoustic signal between transmitter T and acoustic receiver $R_1$. Signal velocities circuitry 20 can divide distance $r_2$ by time of flight $\tau_2$ to determine signal velocity $V_2$ of the acoustic signal between transmitter T and acoustic receiver $R_2$. Signal velocities circuitry 20 can divide distance $r_3$ by time of flight $\tau_3$ to determine signal velocity $V_3$ of the acoustic signal between transmitter T and acoustic receiver $R_3$. Signal velocities circuitry 20 can divide distance $r_n$ by time of flight $\tau_n$ to determine signal velocity $V_n$ of the acoustic signal between transmitter T and acoustic receiver $R_n$.

In response to determining that any one or more of times of flight $\tau_1$-$\tau_n$ has a value of zero or other defined value indicating that the receiver signal from a corresponding one of receivers $R_1$-$R_n$ is not received or is otherwise unsuitable for use with the air data parameter output computations, signal velocities circuitry 20 can output a value of zero or other defined value for the corresponding one of signal velocities $V_1$-$V_n$ indicating that the corresponding receiver signal was not received or is otherwise unsuitable for use with the air data parameter output computations.

Incidence matrix circuitry 22 receives signal velocities $V_1$-$V_n$ from signal velocities circuitry 20. Incidence matrix circuitry 22 determines planar components $V_x$ and $V_y$ of the airflow velocity vector V (FIG. 1) about the exterior of the aircraft and a speed of sound in the air about the aircraft exterior based on the received signal velocities $V_1$-$V_n$ and the known angles of acoustic receivers $R_1$-$R_n$ from acoustic transmitter T.

For instance, a measured time of flight $\tau_j$ of an acoustic signal from an acoustic transmitter to an acoustic receiver $R_j$ can be expressed according to the following equation:

$$\tau_j = \frac{r_j}{C_0 + V\cos(\alpha - \theta_j)} \qquad\qquad \text{(Equation 1)}$$

where $\tau_j$ is the measured time of flight, $r_j$ is the radial distance between the acoustic transmitter and the acoustic receiver $R_j$, $C_0$ is the speed of sound, V is the airflow velocity, $\alpha$ is the relative wind angle, and $\theta_j$ is the angle between the acoustic transmitter and the acoustic receiver $R_j$ with respect to a reference wind angle line.

For each measured time of flight $\tau_j$, the signal velocity $Vj$ to each receiver $Rj$ can therefore be expressed according to the following equation:

$$V_j = \frac{r_j}{\tau_j} = C_0 + V \cos(\alpha - \theta_j) \qquad \text{(Equation 2)}$$

In terms of planar component $V_x$ and $V_y$ of the airflow velocity vector V, the signal velocities of Equation 2 above can be expressed according to the following equation:

$$V_j = \cos \theta_j V_x + \sin \theta_j V_y + C_0 \qquad \text{(Equation 3)}$$

Incidence matrix circuitry 22 can determine planar components $V_x$ and $V_y$ of airflow velocity vector V as well as speed of sound $C_0$ using received signal velocities $V_1$-$V_n$ and an incidence matrix M based on the following equation:

$$\begin{bmatrix} V_1 \\ V_2 \\ V_3 \\ \vdots \\ V_n \end{bmatrix} = M \begin{bmatrix} V_x \\ V_y \\ C_0 \end{bmatrix} \qquad \text{(Equation 4)}$$

where M is an incidence matrix expressed as:

$$\begin{bmatrix} \cos \theta_1 & \sin \theta_1 & 1 \\ \cos \theta_2 & \sin \theta_2 & 1 \\ \cos \theta_3 & \sin \theta_3 & 1 \\ \vdots & \vdots & \vdots \\ \cos \theta_n & \sin \theta_n & 1 \end{bmatrix}$$

where $\theta_1$ is the angle between acoustic receiver $R_1$ and wind angle reference line 12, $\theta_2$ is the angle between acoustic receiver $R_2$ and wind angle reference line 12, $\theta_3$ is the angle between acoustic receiver $R_3$ and wind angle reference line 12, and $\theta_n$ is the angle between acoustic receiver $R_n$ and wind angle reference line 12.

In some examples, incidence matrix circuitry 22 can include in the incidence matrix M only those angles corresponding to signal velocities $V_1$-$V_n$ that do not have a value indicating that a corresponding receiver signal was not received or is otherwise unsuitable for the air data parameter output computations. For instance, in response to determining that signal velocity V1 has a value of zero (or other predefined value), incidence matrix circuitry 22 can exclude angle $\theta_1$ (i.e., the first row) from incidence matrix M in Equation 4 above.

Incidence matrix circuitry 22 can therefore determine the values of planar components $V_x$ and $V_y$ as well as speed of sound $C_0$ according to the following equation:

$$\begin{bmatrix} V_x \\ V_y \\ C_0 \end{bmatrix} = M^+ \begin{bmatrix} V_1 \\ V_2 \\ V_3 \\ \vdots \\ V_n \end{bmatrix} \qquad \text{(Equation 5)}$$

where $M^+$ is a pseudo-inverse of the incidence matrix M from Equation 4 above. Incidence matrix circuitry 22 can determine pseudo-inverse $M^+$ as, e.g., a Moore-Penrose pseudo-inverse.

Incidence matrix circuitry 22, as illustrated in FIG. 2, provides planar components $V_x$ and $V_y$ to wind angle circuitry 24, true airspeed circuitry 26, and Mach number circuitry 28. Incidence matrix circuitry 22 provides speed of sound $C_0$ to Mach number circuitry 28 and static air temperature circuitry 30.

Wind angle circuitry 24 determines relative wind angle $\alpha$, which can correspond to an angle of attack or angle of sideslip of the aircraft. Wind angle circuitry 24 can determine relative wind angle $\alpha$ according to the following equation:

$$\alpha = \tan^{-1}\frac{V_y}{V_x} \qquad\qquad \text{(Equation 6)}$$

True airspeed circuitry 26 determines true airspeed TAS of the airflow about the aircraft exterior according to the following equation:

$$TAS = \sqrt{V_x^2 + V_y^2} \qquad\qquad \text{(Equation 7)}$$

Mach number circuitry 28 determines Mach number M according to the following equation:

$$M = \frac{\sqrt{V_x^2 + V_y^2}}{C_0} \qquad\qquad \text{(Equation 8)}$$

Static air temperature circuitry 30 determines static air temperature SAT according to the following equation:

$$SAT = (kC_0)^2 \qquad\qquad \text{(Equation 9)}$$

where k is the constant 38.96695 $\mathrm{knots}/\sqrt{^{\circ}K}$ .

Control circuitry 14, as illustrated in FIG. 2, outputs relative wind angle $\alpha$, true airspeed TAS, Mach number M, and static air temperature SAT to one or more consuming systems, such as an aircraft flight management system (FMS), autoflight control system (AFCS), electronic flight instrument system (EFIS), or other consuming systems for operational control of the aircraft. Though not illustrated as being output by acoustic air data sensing system 10 in the example of FIG. 2, it should be understood that in some examples, acoustic air data sensing system 10 outputs speed of sound Co as an air data parameter output to the one or more consuming systems.

Accordingly, acoustic air data sensing system 10 implementing techniques described herein can determine air data output parameters based on propagation of an emitted acoustic signal to acoustic receivers that can, in some examples, each be located aft of the acoustic transmitter. The techniques of this disclosure can therefore enable accurate acoustic measurements and air data parameter calculations even at relatively high wind velocities, such as velocities above Mach 0.2, thereby enhancing usability of the acoustic air data sensor for providing air data parameters used for controlled flight of the aircraft.

**Discussion of Possible Embodiments**

The following are non-exclusive descriptions of possible embodiments of the present invention.

An acoustic air data sensing system includes an acoustic transmitter, a plurality of acoustic receivers, and control circuitry. The acoustic transmitter is located to transmit an acoustic signal into airflow about an exterior of a vehicle. Each of the plurality of acoustic receivers is located at a respective angle from a wind angle reference line and a respective distance from the acoustic transmitter to receive the acoustic signal transmitted by the acoustic transmitter. The control circuitry is configured to determine respective times of flight of the acoustic signal from the acoustic transmitter to each of the plurality of acoustic receivers, and determine signal velocities of the acoustic signal to each of the plurality of acoustic receivers based on the respective distances and respective times of flight of the acoustic signal from the acoustic transmitter to the acoustic receivers. The control circuitry is further configured to determine planar components of a velocity of the airflow about the exterior of the vehicle based on the signal velocities and the respective angles of the acoustic receivers from the wind angle reference line, and to determine a speed of sound in the airflow about the exterior of the vehicle based on the signal velocities and the respective angles of the acoustic receivers from the wind angle reference line. The control circuitry is further configured to determine one or more of true airspeed and relative wind angle of the airflow about the exterior of the vehicle based on the planar components of the velocity of the airflow about the exterior of the vehicle, and output the one or more of the true airspeed and the relative wind angle for operational control of the vehicle.

The acoustic air data sensing system of the preceding paragraph can optionally include, additionally and/or alternatively, any one or more of the following features, configurations, operations, and/or additional components:

The control circuitry can be configured to divide the respective distances by the respective times of flight to determine the signal velocities of the acoustic signal to each of the plurality of acoustic receivers.

The control circuitry can be configured to determine the planar components of the velocity of the airflow about the exterior of the vehicle and the speed of sound in the airflow about the exterior of the vehicle using an incidence matrix that is based on the respective angles of the acoustic receivers from the wind angle reference line.

The incidence matrix can take the form of:

$$\begin{bmatrix} \cos\theta_1 & \sin\theta_1 & 1 \\ \vdots & \vdots & \vdots \\ \cos\theta_n & \sin\theta_n & 1 \end{bmatrix}$$

where $\theta_1$ is the angle between the wind angle reference line and a first of the plurality of acoustic receivers, and $\theta_n$ is the angle between the wind angle reference line and an $n^{th}$ of the plurality of acoustic receivers.

The control circuitry can be configured to determine the planar components of the airflow about the exterior of the vehicle and the speed of sound in the airflow about the exterior of the vehicle using the incidence matrix according to the following equation:

$$\begin{bmatrix} V_x \\ V_y \\ C_0 \end{bmatrix} = M^+ \begin{bmatrix} V_1 \\ \vdots \\ V_n \end{bmatrix}$$

where $V_x$ is the planar component of the airflow about the exterior of the vehicle in a direction that is parallel to the wind angle reference line of the vehicle, $V_y$ is the planar component of the airflow about the exterior of the vehicle in a direction that is perpendicular to the wind angle reference line of the vehicle, $C_0$ is the speed of sound in the airflow about the exterior of the vehicle, $M^+$ is a Moore-Penrose pseudo-inverse of the incidence matrix, $V_1$ is the signal velocity of the acoustic signal to the first of the plurality of acoustic receivers, and $V_n$ is the signal velocity of the acoustic signal to the nth of the plurality of acoustic receivers.

The control circuitry can be configured to determine the true airspeed of the airflow about the exterior of the vehicle based on the planar components of the velocity of the airflow about the exterior of the vehicle according to the following equation:

$$TAS = \sqrt{V_x^2 + V_y^2}$$

where $TAS$ is the true airspeed of the airflow about the exterior of the vehicle, $V_x$ is the planar component of the airflow about the exterior of the vehicle in a direction that is parallel to the wind angle reference line of the vehicle, and $V_y$ is the planar component of the airflow about the exterior of the vehicle in a direction that is perpendicular to the wind angle reference line of the vehicle.

The control circuitry can be configured to determine a Mach number of the airflow about the exterior of the vehicle based on the planar components of the velocity of the airflow about the exterior of the vehicle and the speed of sound in the airflow about the exterior of the vehicle according to the following equation:

$$M = \frac{\sqrt{V_x^2 + V_y^2}}{C_0}$$

where M is the Mach number of the airflow about the exterior of the vehicle, $V_x$ is the planar component of the airflow about the exterior of the vehicle in a direction that is parallel to the wind angle reference line of the vehicle, and $V_y$ is the planar component of the airflow about the exterior of the vehicle in a direction that is perpendicular to the wind angle reference line of the vehicle.

The control circuitry can be configured to determine the relative wind angle of the airflow about the exterior of the vehicle based on the planar components of the velocity of the airflow about the exterior of the vehicle according to the following equation:

$$\alpha = \tan^{-1}\frac{V_y}{V_x}$$

where $\alpha$ is the relative wind angle of the airflow about the exterior of the vehicle, $V_x$ is the planar component of the airflow about the exterior of the vehicle in a direction that is parallel to the wind angle reference line of the vehicle, and $V_y$ is the planar component of the airflow about the exterior of the vehicle in a direction that is perpendicular to the wind angle reference line of the vehicle.

The control circuitry can be configured to determine static air temperature of the airflow about the exterior of the vehicle based on the speed of sound in the air about the exterior of the vehicle according to the following equation:

$$SAT = (kC_0)^2$$

where $SAT$ is the static air temperature of the airflow about the exterior of the vehicle, $C_0$ is the speed of sound in the airflow about the exterior of the vehicle, and k is the constant 38.96695 $\mathrm{knots}/\sqrt{°K}$ .

Each of the plurality of acoustic receivers can be located downstream of the acoustic transmitter.

The vehicle can be an aircraft.

A method includes transmitting, by an acoustic transmitter of an acoustic air data sensing system located on a vehicle, an acoustic signal into airflow about an exterior of the vehicle. The method further includes receiving the acoustic signal at a plurality of acoustic receivers of the acoustic air data sensor. Each of the plurality of acoustic receivers is located at a respective angle from a wind angle reference line and a respective distance from the acoustic transmitter. The method further includes determining respective times of flight of the acoustic signal from the acoustic transmitter to each of the plurality of acoustic receivers, determining signal velocities of the acoustic signal to each of the plurality of acoustic receivers based on the respective distances and respective times of flight of the acoustic signal from the acoustic transmitter to the acoustic receivers, and determining planar components of a velocity of the airflow about the exterior of the vehicle based on the signal velocities and the respective angles of the acoustic receivers from the wind angle reference line. The method further includes determining a speed of sound in the airflow about the exterior of the vehicle based on the signal velocities and the respective angles of the acoustic receivers from the wind angle reference line, determining one or more of true airspeed and relative wind angle of the airflow about the exterior of the vehicle based on the planar components of the velocity of the airflow about the exterior of the vehicle, and outputting the one or more of the true airspeed and the relative wind angle for operational control of the vehicle.

The method of the preceding paragraph can optionally include, additionally and/or alternatively, any one or more of the following features, configurations, operations, and/or additional components:

Determining signal velocities of the acoustic signal to each of the plurality of acoustic receivers can include dividing the respective distances by the respective times of flight to determine the signal velocities of the acoustic signal to each of the plurality of acoustic receivers.

Determining the planar components of the velocity of the airflow about the exterior of the vehicle and the speed of sound in the airflow about the exterior of the vehicle can include determining the planar components and the speed of sound using an incidence matrix that is based on the respective angles of the acoustic receivers from the wind angle reference line.

The incidence matrix can take the form of:

$$\begin{bmatrix} \cos\theta_1 & \sin\theta_1 & 1 \\ \vdots & \vdots & \vdots \\ \cos\theta_n & \sin\theta_n & 1 \end{bmatrix}$$

where $\theta_1$ is the angle between the wind angle reference line and a first of the plurality of acoustic receivers, and $\theta_n$ is the angle between the wind angle reference line and an $n^{th}$ of the plurality of acoustic receivers.

Determining the planar components of the airflow about the exterior of the vehicle and the speed of sound in the airflow about the exterior of the vehicle can include determining the planar components and the speed of sound according to the following equation

$$\begin{bmatrix} V_x \\ V_y \\ C_0 \end{bmatrix} = M^+ \begin{bmatrix} V_1 \\ \vdots \\ V_n \end{bmatrix}$$

where $V_x$ is the planar component of the airflow about the exterior of the vehicle in a direction that is parallel to the wind angle reference line of the vehicle, $V_y$ is the planar component of the airflow about the exterior of the vehicle in a direction that is perpendicular to the wind angle reference line of the vehicle, $C_0$ is the speed of sound in the airflow about the exterior of the vehicle, $M^+$ is a Moore-Penrose pseudo-inverse of the incidence matrix, $V_1$ is the signal velocity of the acoustic signal to the first of the plurality of acoustic receivers, and $V_n$ is the signal velocity of the acoustic signal to the nth of the plurality of acoustic receivers.

Determining the true airspeed of the airflow about the exterior of the vehicle based on the planar components of the velocity of the airflow about the exterior of the vehicle can include determining the true airspeed according to the following equation:

$$TAS = \sqrt{V_x^2 + V_y^2}$$

where $TAS$ is the true airspeed of the airflow about the exterior of the vehicle, $V_x$ is the planar component of the airflow about the exterior of the vehicle in a direction that is parallel to the wind angle reference line of the vehicle, and $V_y$ is the planar component of the airflow about the exterior of the vehicle in a direction that is perpendicular to the wind angle reference line of the vehicle.

The method can further include determining a Mach number of the airflow about the exterior of the vehicle based on the planar components of the velocity of the airflow about the exterior of the vehicle and the speed of sound in the airflow about the exterior of the vehicle according to the following equation:

$$M = \frac{\sqrt{V_x^2 + V_y^2}}{C_0}$$

where M is the Mach number of the airflow about the exterior of the vehicle, $V_x$ is the planar component of the airflow about the exterior of the vehicle in a direction that is parallel to the wind angle reference line of the vehicle, and $V_y$ is the planar component of the airflow about the exterior of the vehicle in a direction that is perpendicular to the wind angle reference line of the vehicle.

Determining the relative wind angle of the airflow about the exterior of the vehicle based on the planar components of the velocity of the airflow about the exterior of the vehicle can include determining the relative wind angle according to the following equation:

$$\alpha = \tan^{-1}\frac{V_y}{V_x}$$

where $\alpha$ is the relative wind angle of the airflow about the exterior of the vehicle, $V_x$ is the planar component of the airflow about the exterior of the vehicle in a direction that is parallel to the wind angle reference line of the vehicle, and $V_y$ is the planar component of the airflow about the exterior of the vehicle in a direction that is perpendicular to the wind angle reference line of the vehicle.

The method can further include determining static air temperature of the airflow about the exterior of the vehicle based on the speed of sound in the air about the exterior of the vehicle according to the following equation:

$$SAT = (kC_0)^2$$

where $SAT$ is the static air temperature of the airflow about the exterior of the vehicle, $C_0$ is the speed of sound in the airflow about the exterior of the vehicle, and k is the constant 38.96695 $\mathrm{knots}/\sqrt{°K}$ .

Each of the plurality of acoustic receivers can be located downstream of the acoustic transmitter.

The vehicle can be an aircraft.

A method includes transmitting, by an acoustic transmitter located on a vehicle, an acoustic signal into airflow about an exterior of the vehicle, and receiving the acoustic signal at a plurality of acoustic receivers. Each of the plurality of acoustic receivers can be located at a respective angle from a wind angle reference line of the vehicle and at a respective distance from the acoustic transmitter. The method further includes determining at least one of true airspeed, relative wind angle, Mach number, static air temperature, and a speed of sound through the airflow without directly measuring pressure or angle of rotation of a vane within the airflow or requiring directly opposing locations of any two of the acoustic receivers.

**Claims**

1. An acoustic air data sensing system comprising:

an acoustic transmitter (T) located to transmit an acoustic signal into airflow about an exterior of a vehicle;
a plurality of acoustic receivers, each of the plurality of acoustic receivers ($R_1$-$R_N$) located at a respective angle from a wind angle reference line and a respective distance from the acoustic transmitter (T) to receive the acoustic signal transmitted by the acoustic transmitter (T); and
control circuitry configured to:

determine respective times of flight of the acoustic signal from the acoustic transmitter to each of the plurality of acoustic receivers;
determine signal velocities of the acoustic signal to each of the plurality of acoustic receivers based on the respective distances and respective times of flight of the acoustic signal from the acoustic transmitter to the acoustic receivers;
determine planar components of a velocity of the airflow about the exterior of the vehicle based on the signal velocities and the respective angles of the acoustic receivers from the wind angle reference line;
determine a speed of sound in the airflow about the exterior of the vehicle based on the signal velocities and the respective angles of the acoustic receivers from the wind angle reference line;
determine one or more of true airspeed and relative wind angle of the airflow about the exterior of the vehicle based on the planar components of the velocity of the airflow about the exterior of the vehicle; and
output the one or more of the true airspeed and the relative wind angle for operational control of the vehicle;
**characterized in that**
the control circuitry is configured to determine the planar components of the velocity of the airflow about the exterior of the vehicle and the speed of sound in the airflow about the exterior of the vehicle using an incidence matrix that is based on the respective angles of the acoustic receivers from the wind angle reference line and the determined signal velocities of the acoustic signal to each of the plurality of acoustic receivers, and

preferably

wherein the incidence matrix takes the form of:

$$\begin{bmatrix} \cos\theta_1 & \sin\theta_1 & 1 \\ \vdots & \vdots & \vdots \\ \cos\theta_n & \sin\theta_n & 1 \end{bmatrix}$$

wherein $\theta_1$ is the angle between the wind angle reference line and a first of the plurality of acoustic receivers, and
wherein $\theta_n$ is the angle between the wind angle reference line and an $n^{th}$ of the plurality of acoustic receivers, and more preferably
wherein the control circuitry is configured to determine the planar components of the airflow about the exterior of the vehicle and the speed of sound in the airflow about the exterior of the vehicle using the incidence matrix according to the following equation:

$$\begin{bmatrix} V_x \\ V_y \\ C_0 \end{bmatrix} = M^+ \begin{bmatrix} V_1 \\ \vdots \\ V_n \end{bmatrix}$$

wherein $V_x$ is the planar component of the airflow about the exterior of the vehicle in a direction that is parallel to the wind angle reference line of the vehicle;
wherein $V_y$ is the planar component of the airflow about the exterior of the vehicle in a direction that is perpendicular to the wind angle reference line of the vehicle;
wherein $C_0$ is the speed of sound in the airflow about the exterior of the vehicle;
wherein $M^+$ is a Moore-Penrose pseudo-inverse of the incidence matrix; and
wherein $V_1$ is the signal velocity of the acoustic signal to the first of the plurality of acoustic receivers; and

wherein $V_n$ is the signal velocity of the acoustic signal to the nth of the plurality of acoustic receivers.

2. The acoustic air data sensor of claim 1,

wherein the control circuitry is configured to determine the true airspeed of the airflow about the exterior of the vehicle based on the planar components of the velocity of the airflow about the exterior of the vehicle according to the following equation:

$$TAS = \sqrt{V_x^2 + V_y^2}$$

wherein $TAS$ is the true airspeed of the airflow about the exterior of the vehicle;
wherein $V_x$ is the planar component of the airflow about the exterior of the vehicle in a direction that is parallel to the wind angle reference line of the vehicle; and
wherein $V_y$ is the planar component of the airflow about the exterior of the vehicle in a direction that is perpendicular to the wind angle reference line of the vehicle.

3. The acoustic air data sensor of any preceding claim,

wherein the control circuitry is configured to determine a Mach number of the airflow about the exterior of the vehicle based on the planar components of the velocity of the airflow about the exterior of the vehicle and the speed of sound in the airflow about the exterior of the vehicle according to the following equation:

$$M = \frac{\sqrt{V_x^2 + V_y^2}}{C_0}$$

wherein M is the Mach number of the airflow about the exterior of the vehicle;
wherein $V_x$ is the planar component of the airflow about the exterior of the vehicle in a direction that is parallel to the wind angle reference line of the vehicle; and
wherein $V_y$ is the planar component of the airflow about the exterior of the vehicle in a direction that is perpendicular to the wind angle reference line of the vehicle.

4. The acoustic air data sensor of any preceding claim,

wherein the control circuitry is configured to determine the relative wind angle of the airflow about the exterior of the vehicle based on the planar components of the velocity of the airflow about the exterior of the vehicle according to the following equation:

$$\alpha = \tan^{-1} \frac{V_y}{V_x}$$

wherein $\alpha$ is the relative wind angle of the airflow about the exterior of the vehicle;
wherein $V_x$ is the planar component of the airflow about the exterior of the vehicle in a direction that is parallel to the wind angle reference line of the vehicle; and
wherein $V_y$ is the planar component of the airflow about the exterior of the vehicle in a direction that is perpendicular to the wind angle reference line of the vehicle.

5. The acoustic air data sensor of any preceding claim,

wherein the control circuitry is configured to determine static air temperature of the airflow about the exterior of the vehicle based on the speed of sound in the air about the exterior of the vehicle according to the following equation:

$$SAT = (kC_0)^2$$

wherein $SAT$ is the static air temperature of the airflow about the exterior of the vehicle;
wherein $C_0$ is the speed of sound in the airflow about the exterior of the vehicle; and
wherein k is the constant $38.96695 \ \mathrm{knots}/\sqrt{°K}$.

6. The acoustic air data sensor of any preceding claim,

wherein each of the plurality of acoustic receivers is located downstream of the acoustic transmitter; and/or
wherein the vehicle is an aircraft.

7. A method comprising:

transmitting, by an acoustic transmitter of an acoustic air data sensing system located on an vehicle, an acoustic signal into airflow about an exterior of the vehicle;
receiving the acoustic signal at a plurality of acoustic receivers of the acoustic air data sensor, each of the plurality of acoustic receivers located at a respective angle from a wind angle reference line and a respective distance from the acoustic transmitter;
determining respective times of flight of the acoustic signal from the acoustic transmitter to each of the plurality of acoustic receivers;
determining signal velocities of the acoustic signal to each of the plurality of acoustic receivers based on the respective distances and respective times of flight of the acoustic signal from the acoustic transmitter to the acoustic receivers;
determining planar components of a velocity of the airflow about the exterior of the vehicle and a speed of sound in the airflow about the exterior of the vehicle based on the signal velocities and the respective angles of the acoustic receivers from the acoustic transmitter;
determining one or more of true airspeed and relative wind angle of the airflow about the exterior of the vehicle based on the planar components of the velocity of the airflow about the exterior of the vehicle; and
outputting the one or more of the true airspeed and the relative wind angle for operational control of the vehicle;
**characterized by**
determining the planar components of the velocity of the airflow about the exterior of the vehicle and the speed of sound in the airflow about the exterior of the vehicle comprises determining the planar components and the speed of sound using an incidence matrix that is based on the respective angles of the acoustic receivers from the acoustic transmitter and the determined signal velocities of the acoustic signal to each of the plurality of acoustic receivers, and preferably
wherein the incidence matrix takes the form of:

$$\begin{bmatrix} \cos\theta_1 & \sin\theta_1 & 1 \\ \vdots & \vdots & \vdots \\ \cos\theta_n & \sin\theta_n & 1 \end{bmatrix}$$

wherein $\theta_1$ is the angle between the wind angle reference line and a first of the plurality of acoustic receivers, and
wherein $\theta_n$ is the angle between the wind angle reference line and an $n^{th}$ of the plurality of acoustic receivers, and more preferably
wherein determining the planar components of the airflow about the exterior of the vehicle and the speed of sound in the airflow about the exterior of the vehicle comprises determining the planar components and the speed of sound according to the following equation:

$$\begin{bmatrix} V_x \\ V_y \\ C_0 \end{bmatrix} = M^+ \begin{bmatrix} V_1 \\ \vdots \\ V_n \end{bmatrix}$$

wherein $V_x$ is the planar component of the airflow about the exterior of the vehicle in a direction that is parallel to the wind angle reference line of the vehicle;
wherein $V_y$ is the planar component of the airflow about the exterior of the vehicle in a direction that is perpendicular to the wind angle reference line of the vehicle;

wherein $C_0$ is the speed of sound in the airflow about the exterior of the vehicle;

wherein $M^+$ is a Moore-Penrose pseudo-inverse of the incidence matrix; and

wherein $V_1$ is the signal velocity of the acoustic signal to the first of the plurality of acoustic receivers; and

wherein $V_n$ is the signal velocity of the acoustic signal to the nth of the plurality of acoustic receivers.

8.  The method of claim 7,

   wherein determining the true airspeed of the airflow about the exterior of the vehicle based on the planar components of the velocity of the airflow about the exterior of the vehicle comprises determining the true airspeed according to the following equation:

   $$TAS = \sqrt{V_x^2 + V_y^2}$$

   wherein *TAS* is the true airspeed of the airflow about the exterior of the vehicle;
   wherein $V_x$ is the planar component of the airflow about the exterior of the vehicle in a direction that is parallel to the wind angle reference line of the vehicle; and
   wherein $V_y$ is the planar component of the airflow about the exterior of the vehicle in a direction that is perpendicular to the wind angle reference line of the vehicle.

9.  The method of any of claims 7 and 8, further comprising:

   determining a Mach number of the airflow about the exterior of the vehicle based on the planar components of the velocity of the airflow about the exterior of the vehicle and the speed of sound in the airflow about the exterior of the vehicle according to the following equation:

   $$M = \frac{\sqrt{V_x^2 + V_y^2}}{C_0}$$

   wherein M is the Mach number of the airflow about the exterior of the vehicle;
   wherein $V_x$ is the planar component of the airflow about the exterior of the vehicle in a direction that is parallel to the wind angle reference line of the vehicle; and
   wherein $V_y$ is the planar component of the airflow about the exterior of the vehicle in a direction that is perpendicular to the wind angle reference line of the vehicle.

10. The method of any of claims 7-9,

   wherein determining the relative wind angle of the airflow about the exterior of the vehicle based on the planar components of the velocity of the airflow about the exterior of the vehicle comprises determining the relative wind angle according to the following equation:

   $$\alpha = \tan^{-1}\frac{V_y}{V_x}$$

   wherein $\alpha$ is the relative wind angle of the airflow about the exterior of the vehicle;
   wherein $V_x$ is the planar component of the airflow about the exterior of the vehicle in a direction that is parallel to the wind angle reference line of the vehicle; and
   wherein $V_y$ is the planar component of the airflow about the exterior of the vehicle in a direction that is perpendicular to the wind angle reference line of the vehicle.

11. The method of any of claims 7-10, further comprising:

   determining static air temperature of the airflow about the exterior of the vehicle based on the speed of sound in the air about the exterior of the vehicle according to the following equation:

$$SAT = (kC_0)^2$$

wherein *SAT* is the static air temperature of the airflow about the exterior of the vehicle;
wherein $C_0$ is the speed of sound in the airflow about the exterior of the vehicle; and
wherein k is the constant 38.96695 $\text{knots}/\sqrt{°K}$.

12. The method of any of claims 7-11,
wherein each of the plurality of acoustic receivers is located downstream of the acoustic transmitter.

**Patentansprüche**

1. Akustisches Luftdatenabtastsystem, umfassend:

einen akustischen Sender (T), der gelegen ist, um ein akustisches Signal in einen Luftstrom um ein Äußeres eines Fahrzeugs zu übertragen;
eine Vielzahl akustischer Empfänger, wobei jeder der Vielzahl akustischer Empfänger ($R_1$-$R_N$) in einem entsprechenden Winkel von einer Windwinkel-Referenzlinie und in einer jeweiligen Distanz von dem akustischen Sender (T) liegt, um das akustische Signal, das von dem akustischen Sender (T) übertragen wird, zu empfangen; und
eine Steuerschaltanordnung, die dazu konfiguriert ist:

jeweilige Laufzeiten des akustischen Signals von dem akustischen Sender zu jedem der Vielzahl akustischer Empfänger zu bestimmen; Signalgeschwindigkeiten des akustischen Signals zu jedem der Vielzahl akustischer Empfänger basierend auf der jeweiligen Distanzen und jeweiligen Laufzeiten des akustischen Signals von dem akustischen Sender zu den akustischen Empfängern zu bestimmen;
planare Komponenten einer Geschwindigkeit des Luftstroms um das Äußere des Fahrzeugs basierend auf den Signalgeschwindigkeiten und den jeweiligen Winkeln der akustischen Empfänger von der Windwinkel-Referenzlinie zu bestimmen;
eine Schallgeschwindigkeit in der Luftströmung um das Äußere des Fahrzeugs basierend auf den Signalgeschwindigkeiten und den jeweiligen Winkeln der akustischen Empfänger von der Windwinkel-Referenzlinie zu bestimmen;
eines oder mehrere von wahrer Fluggeschwindigkeit und relativem Windwinkel des Luftstroms um das Äußere des Fahrzeugs basierend auf den planaren Komponenten der Geschwindigkeit des Luftstroms um das Äußere des Fahrzeugs zu bestimmen; und
den einen oder die mehreren der wahren Fluggeschwindigkeit und des relativen Windwinkels zur Betriebssteuerung des Fahrzeugs auszugeben; **dadurch gekennzeichnet, dass**

die Steuerschaltanordnung dazu konfiguriert ist, die planaren Komponenten der Geschwindigkeit des Luftstroms um das Äußere des Fahrzeugs und die Schallgeschwindigkeit in dem Luftstrom um das Äußere des Fahrzeugs unter Verwenden einer Einfallsmatrix zu bestimmen, die auf den jeweiligen Winkeln der akustischen Empfänger von der Windwinkel-Referenzlinie und den bestimmten Signalgeschwindigkeiten des akustischen Signals an jedem der Vielzahl akustischer Empfänger basiert, und
wobei
die Einfallsmatrix bevorzugt die folgende Form annimmt:

$$\begin{bmatrix} \cos\theta_1 & \sin\theta_1 & 1 \\ \vdots & \vdots & \vdots \\ \cos\theta_n & \sin\theta_n & 1 \end{bmatrix}$$

wobei $\theta_1$ der Winkel zwischen der Windwinkel-Referenzlinie und einem ersten der Vielzahl akustischer Empfänger ist, und
wobei $\theta_n$ der Winkel zwischen der Windwinkel-Referenzlinie und einem n-ten der Vielzahl akustischer Empfänger ist, und wobei bevorzugter
die Steuerschaltanordnung dazu konfiguriert ist, die planaren Komponenten des Luftstrom um das Äußere

des Fahrzeugs und die Schallgeschwindigkeit in dem Luftstrom um das Äußere des Fahrzeugs unter Verwenden der Einfallsmatrix gemäß der folgenden Gleichung zu bestimmen:

$$\begin{bmatrix} V_x \\ V_y \\ C_0 \end{bmatrix} = M^+ \begin{bmatrix} V_1 \\ \vdots \\ V_n \end{bmatrix}$$

wobei $V_x$ die planare Komponente des Luftstroms um das Äußere des Fahrzeugs in einer Richtung ist, die zu der Windwinkel-Referenzlinie des Fahrzeugs parallel ist;

wobei $V_y$ die planare Komponente des Luftstroms um das Äußere des Fahrzeugs in einer Richtung ist, die zu der Windwinkel-Referenzlinie des Fahrzeugs senkrecht ist;

wobei $C_0$ die Schallgeschwindigkeit in dem Luftstrom um das Äußere des Fahrzeugs ist;

wobei $M^+$ eine Moore-Penrose-Pseudoinverse der Einfallsmatrix ist; und

wobei $V_1$ die Signalgeschwindigkeit des akustischen Signals zu dem ersten der Vielzahl akustischer Empfänger ist; und

wobei $V_n$ die Signalgeschwindigkeit des akustischen Signals zu dem n-ten der Vielzahl akustischer Empfänger ist.

**2.** Akustischer Luftdatensensor nach Anspruch 1,

wobei die Steuerschaltanordnung dazu konfiguriert ist, die wahre Fluggeschwindigkeit des Luftstroms um das Äußere des Fahrzeugs basierend auf den planaren Komponenten der Geschwindigkeit des Luftstroms um das Äußere des Fahrzeugs gemäß der folgenden Gleichung zu bestimmen:

$$TAS = \sqrt{V_x^2 + V_y^2}$$

wobei $TAS$ die wahre Fluggeschwindigkeit des Luftstroms um das Äußere des Fahrzeugs ist;

wobei $V_x$ die planare Komponente des Luftstroms um das Äußere des Fahrzeugs in einer Richtung ist, die zu der Windwinkel-Referenzlinie des Fahrzeugs parallel ist; und

wobei $V_y$ die planare Komponente des Luftstroms um das Äußere des Fahrzeugs in einer Richtung ist, die zu der Windwinkel-Referenzlinie des Fahrzeugs senkrecht ist.

**3.** Akustischer Luftdatensensor nach einem der vorstehenden Ansprüche,

wobei die Steuerschaltanordnung dazu konfiguriert ist, eine Machzahl des Luftstroms um das Äußere des Fahrzeugs basierend auf den planaren Komponenten der Geschwindigkeit des Luftstroms um das Äußere des Fahrzeugs und der Schallgeschwindigkeit in dem Luftstrom um das Äußere des Fahrzeugs gemäß der folgenden Gleichung zu bestimmen:

$$M = \frac{\sqrt{V_x^2 + V_y^2}}{C_0}$$

wobei M die Machzahl des Luftstroms um das Äußere des Fahrzeugs ist;

wobei $V_x$ die planare Komponente des Luftstroms um das Äußere des Fahrzeugs in einer Richtung ist, die zu der Windwinkel-Referenzlinie des Fahrzeugs parallel ist; und

wobei $V_y$ die planare Komponente des Luftstroms um das Äußere des Fahrzeugs in einer Richtung ist, die zu der Windwinkel-Referenzlinie des Fahrzeugs senkrecht ist.

**4.** Akustischer Luftdatensensor nach einem vorstehenden Anspruch, wobei die Steuerschaltanordnung dazu konfiguriert ist, den relativen Windwinkel des Luftstroms um das Äußere des Fahrzeugs basierend auf den planaren Komponenten der Geschwindigkeit des Luftstroms um das Äußere des Fahrzeugs gemäß der folgenden Gleichung zu bestimmen:

$$\alpha \ = \ \tan^{-1} \frac{V_y}{V_x}$$

wobei a der relative Windwinkel des Luftstroms um das Äußere des Fahrzeugs ist;

wobei $V_x$ die planare Komponente des Luftstroms um das Äußere des Fahrzeugs in einer Richtung ist, die zu der Windwinkel-Referenzlinie des Fahrzeugs parallel ist; und

wobei $V_y$ die planare Komponente des Luftstroms um das Äußere des Fahrzeugs in einer Richtung ist, die zu der Windwinkel-Referenzlinie des Fahrzeugs senkrecht ist.

5. Akustischer Luftdatensensor nach einem vorstehenden Anspruch, wobei die Steuerschaltanordnung dazu konfiguriert ist, die statische Lufttemperatur des Luftstroms um das Äußere des Fahrzeugs basierend auf der Schallgeschwindigkeit in der Luft um das Äußere des Fahrzeugs gemäß der folgenden Gleichung zu bestimmen:

$$SAT \ = (kC_0)^2$$

wobei *SAT* die statische Lufttemperatur des Luftstroms um das Äußere des Fahrzeugs ist;

wobei $C_0$ die Schallgeschwindigkeit in dem Luftstrom um das Äußere des Fahrzeugs ist; und

wobei k die Konstante 38,96695 $\text{Knoten}/\sqrt{^\circ K}$ ist.

6. Akustischer Luftdatensensor nach einem vorstehenden Anspruch,

wobei jeder der Vielzahl akustischer Empfänger dem akustischen Sender nachgelagert liegt; und/oder

wobei das Fahrzeug ein Luftfahrzeug ist.

7. Verfahren, umfassend:

Übertragen durch einen akustischen Sender eines akustischen Luftdatenabtastsystems, das auf einem Fahrzeug liegt, eines akustischen Signals in den Luftstrom um ein Äußeres des Fahrzeugs;

Empfangen des akustischen Signals an einer Vielzahl akustischer Empfänger des akustischen Luftdatensensors, wobei jeder der Vielzahl akustischer Empfänger an einem jeweiligen Winkel von einer Windwinkel-Referenzlinie und in einer jeweiligen Distanz von dem akustischen Sender liegt;

Bestimmen jeweiliger Laufzeiten des akustischen Signals von dem akustischen Sender zu jedem der Vielzahl akustischer Empfänger; Bestimmen von Signalgeschwindigkeiten des akustischen Signals zu jedem der Vielzahl akustischer Empfänger basierend auf den jeweiligen Distanzen und jeweiligen Laufzeiten des akustischen Signals von dem akustischen Sender zu den akustischen Empfängern;

Bestimmen planarer Komponenten einer Geschwindigkeit des Luftstroms um das Äußere des Fahrzeugs und einer Schallgeschwindigkeit in dem Luftstrom um das Äußere des Fahrzeugs basierend auf den Signalgeschwindigkeiten und den jeweiligen Winkeln der akustischen Empfänger von dem akustischen Sender;

Bestimmen eines oder mehrerer von wahrer Fluggeschwindigkeit und relativem Windwinkel des Luftstroms um das Äußere des Fahrzeugs basierend auf den planaren Komponenten der Geschwindigkeit des Luftstroms um das Äußere des Fahrzeugs; und

Ausgeben des einen oder der mehreren der wahren Fluggeschwindigkeit und des relativen Windwinkels zur Betriebssteuerung des Fahrzeugs; **dadurch gekennzeichnet, dass** das Bestimmen der planaren Komponenten der Geschwindigkeit des Luftstroms um das Äußere des Fahrzeugs und der Schallgeschwindigkeit in dem Luftstrom um das Äußere des Fahrzeugs das Bestimmen der planaren Komponenten und der Schallgeschwindigkeit unter Verwenden einer Einfallsmatrix, die auf den jeweiligen Winkeln der akustischen Empfänger von den akustischen Sendern und den bestimmten Signalgeschwindigkeiten des akustischen Signals zu jedem der Vielzahl akustischer Empfänger basiert, umfasst, und die Einfallsmatrix bevorzugt die folgende Form annimmt:

$$\begin{bmatrix} \cos\theta_1 & \sin\theta_1 & 1 \\ \vdots & \vdots & \vdots \\ \cos\theta_n & \sin\theta_n & 1 \end{bmatrix}$$

wobei $\theta_1$ der Winkel zwischen der Windwinkel-Referenzlinie und einem ersten der Vielzahl akustischer Empfänger ist, und

wobei $\theta_n$ der Winkel zwischen der Windwinkel-Referenzlinie und einem $n$-ten der Vielzahl akustischer Empfänger ist, und wobei bevorzugter

das Bestimmen der planaren Komponenten des Luftstroms um das Äußere des Fahrzeugs und der Schallgeschwindigkeit in dem Luftstrom um das Äußere des Fahrzeugs bevorzugt das Bestimmen der planaren Komponenten und der Schallgeschwindigkeit gemäß der folgenden Gleichung umfasst:

$$\begin{bmatrix} V_x \\ V_y \\ C_0 \end{bmatrix} = M^+ \begin{bmatrix} V_1 \\ \vdots \\ V_n \end{bmatrix}$$

wobei $V_x$ die planare Komponente des Luftstroms um das Äußere des Fahrzeugs in einer Richtung ist, die zu der Windwinkel-Referenzlinie des Fahrzeugs parallel ist;

wobei $V_y$ die planare Komponente des Luftstroms um das Äußere des Fahrzeugs in einer Richtung ist, die zu der Windwinkel-Referenzlinie des Fahrzeugs senkrecht ist;

wobei $C_0$ die Schallgeschwindigkeit in dem Luftstrom um das Äußere des Fahrzeugs ist;

wobei $M^+$ eine Moore-Penrose-Pseudoinverse der Einfallsmatrix ist; und

wobei $V_1$ die Signalgeschwindigkeit des akustischen Signals zu dem ersten der Vielzahl akustischer Empfänger ist; und

wobei $V_n$ die Signalgeschwindigkeit des akustischen Signals zu dem n-ten der Vielzahl akustischer Empfänger ist.

8. Verfahren nach Anspruch 7,

wobei das Bestimmen der wahren Fluggeschwindigkeit des Luftstroms um das Äußere des Fahrzeugs basierend auf den planaren Komponenten der Geschwindigkeit des Luftstroms um das Äußere des Fahrzeugs das Bestimmen der wahren Fluggeschwindigkeit gemäß der folgenden Gleichung umfasst:

$$TAS = \sqrt{V_x^2 + V_y^2}$$

wobei $TAS$ die wahre Fluggeschwindigkeit des Luftstroms um das Äußere des Fahrzeugs ist;

wobei $V_x$ die planare Komponente des Luftstroms um das Äußere des Fahrzeugs in einer Richtung ist, die zu der Windwinkel-Referenzlinie des Fahrzeugs parallel ist; und

wobei $V_y$ die planare Komponente des Luftstroms um das Äußere des Fahrzeugs in einer Richtung ist, die zu der Windwinkel-Referenzlinie des Fahrzeugs senkrecht ist.

9. Verfahren nach einem der Ansprüche 7 oder 8, umfassend:

Bestimmen einer Machzahl des Luftstroms um das Äußere des Fahrzeugs basierend auf den planaren Komponenten der Geschwindigkeit des Luftstroms um das Äußere des Fahrzeugs und der Schallgeschwindigkeit in dem Luftstrom um das Äußere des Fahrzeugs gemäß der folgenden Gleichung:

$$M = \frac{\sqrt{V_x^2 + V_y^2}}{C_0}$$

wobei M die Machzahl des Luftstroms um das Äußere des Fahrzeugs ist;

wobei $V_x$ die planare Komponente des Luftstroms um das Äußere des Fahrzeugs in einer Richtung ist, die zu der Windwinkel-Referenzlinie des Fahrzeugs parallel ist; und

wobei $V_y$ die planare Komponente des Luftstroms um das Äußere des Fahrzeugs in einer Richtung ist, die zu der Windwinkel-Referenzlinie des Fahrzeugs senkrecht ist.

10. Verfahren nach einem der Ansprüche 7-9,

wobei das Bestimmen des relativen Windwinkels des Luftstroms um das Äußere des Fahrzeugs basierend auf den planaren Komponenten der Geschwindigkeit des Luftstroms um das Äußere des Fahrzeugs das Bestimmen des relativen Windwinkels gemäß der folgenden Gleichung umfasst:

$$\alpha = \tan^{-1}\frac{V_y}{V_x}$$

wobei $\alpha$ der relative Windwinkel des Luftstroms um das Äußere des Fahrzeugs ist;

wobei $V_x$ die planare Komponente des Luftstroms um das Äußere des Fahrzeugs in einer Richtung ist, die zu der Windwinkel-Referenzlinie des Fahrzeugs parallel ist; und

wobei $V_y$ die planare Komponente des Luftstroms um das Äußere des Fahrzeugs in einer Richtung ist, die zu der Windwinkel-Referenzlinie des Fahrzeugs senkrecht ist.

**11.** Verfahren nach einem der Ansprüche 7-10, das ferner umfassend:

Bestimmen der statischen Lufttemperatur des Luftstroms um das Äußere des Fahrzeugs basierend auf der Schallgeschwindigkeit in der Luft um das Äußere des Fahrzeugs gemäß der folgenden Gleichung:

$$SAT = (kC_0)^2$$

wobei *SAT* die statische Lufttemperatur des Luftstroms um das Äußere des Fahrzeugs ist;

wobei $C_0$ die Schallgeschwindigkeit in dem Luftstrom um das Äußere des Fahrzeugs ist; und

wobei k die Konstante 38,96695 $\mathrm{Knoten}/\sqrt{{}^\circ K}$ ist .

**12.** Verfahren nach einem der Ansprüche 7-11,
wobei jeder der Vielzahl akustischer Empfänger dem akustischen Sender nachgelagert liegt.

**Revendications**

**1.** Système de détection de données d'air acoustique comprenant :

un émetteur acoustique (T) situé pour transmettre un signal acoustique dans un flux d'air autour de l'extérieur d'un véhicule ;

une pluralité de récepteurs acoustiques, chacun de la pluralité de récepteurs acoustiques ($R_1$ à $R_N$) étant situé à un angle respectif par rapport à une ligne de référence d'angle du vent et à une distance respective de l'émetteur acoustique (T) pour recevoir le signal acoustique transmis par l'émetteur acoustique (T) ; et

un circuit de commande configuré pour :

déterminer les temps de vol respectifs du signal acoustique depuis l'émetteur acoustique vers chacun de la pluralité de récepteurs acoustiques ;

déterminer les vitesses de signal du signal acoustique vers chacun de la pluralité de récepteurs acoustiques sur la base des distances respectives et des temps de vol respectifs du signal acoustique entre l'émetteur acoustique et les récepteurs acoustiques ;

déterminer les composantes planes d'une vitesse du flux d'air autour de l'extérieur du véhicule sur la base des vitesses de signal et des angles respectifs des récepteurs acoustiques à partir de la ligne de référence d'angle du vent ;

déterminer une vitesse du son dans le flux d'air autour de l'extérieur du véhicule sur la base des vitesses de signal et des angles respectifs des récepteurs acoustiques à partir de la ligne de référence d'angle du vent ;

déterminer un ou plusieurs éléments parmi la vitesse effective de l'air et l'angle de vent relatif du flux d'air autour de l'extérieur du véhicule sur la base des composantes planes de la vitesse du flux d'air autour de l'extérieur du véhicule ; et émettre le ou les éléments parmi la vitesse effective de l'air et l'angle de vent relatif pour la commande opérationnelle du véhicule ; **caractérisé en ce que**

le circuit de commande est configuré pour déterminer les composantes planes de la vitesse du flux d'air autour de l'extérieur du véhicule et la vitesse du son dans le flux d'air autour de l'extérieur du véhicule à l'aide d'une matrice d'incidence qui est basée sur les angles respectifs des récepteurs acoustiques par rapport à la ligne de référence d'angle du vent et les vitesses de signal déterminées du signal acoustique à chacun de la pluralité de récepteurs acoustiques, et

de préférence

dans lequel la matrice d'incidence prend la forme suivante :

$$\begin{bmatrix} \cos\theta_1 & \sin\theta_1 & 1 \\ \vdots & \vdots & \vdots \\ \cos\theta_n & \sin\theta_n & 1 \end{bmatrix}$$

où $\theta_1$ est l'angle entre la ligne de référence d'angle du vent et un premier de la pluralité de récepteurs acoustiques, et

où $\theta_n$ est l'angle entre la ligne de référence d'angle du vent et un $n^{\text{ième}}$ de la pluralité de récepteurs acoustiques, et de manière davantage préférée

dans lequel le circuit de commande est configuré pour déterminer les composantes planes du flux d'air autour de l'extérieur du véhicule et la vitesse du son dans le flux d'air autour de l'extérieur du véhicule à l'aide de la matrice d'incidence selon l'équation suivante :

$$\begin{bmatrix} V_x \\ V_y \\ C_0 \end{bmatrix} = M^+ \begin{bmatrix} V_1 \\ \vdots \\ V_n \end{bmatrix}$$

où $V_x$ est la composante plane du flux d'air autour de l'extérieur du véhicule dans une direction qui est parallèle à la ligne de référence d'angle du vent du véhicule ;

où $V_y$ est la composante plane du flux d'air autour de l'extérieur du véhicule dans une direction qui est perpendiculaire à la ligne de référence d'angle du vent du véhicule ;

où $C_0$ est la vitesse du son dans le flux d'air autour de l'extérieur du véhicule ;

où $M^+$ est un pseudo-inverse de Moore-Penrose de la matrice d'incidence ; et

où $V_1$ est la vitesse de signal du signal acoustique vers le premier de la pluralité de récepteurs acoustiques ; et

où $V_n$ est la vitesse de signal du signal acoustique vers le nième de la pluralité de récepteurs acoustiques.

2. Capteur de données d'air acoustique selon la revendication 1,

dans lequel le circuit de commande est configuré pour déterminer la vitesse effective de l'air du flux d'air autour de l'extérieur du véhicule sur la base des composantes planes de la vitesse du flux d'air autour de l'extérieur du véhicule selon l'équation suivante :

$$TAS = \sqrt{V_x^2 + V_y^2}$$

où $TAS$ est la vitesse effective de l'air du flux d'air autour de l'extérieur du véhicule ;

où $V_x$ est la composante plane du flux d'air autour de l'extérieur du véhicule dans une direction qui est parallèle à la ligne de référence d'angle du vent du véhicule ; et

où $V_y$ est la composante plane du flux d'air autour de l'extérieur du véhicule dans une direction qui est perpendiculaire à la ligne de référence d'angle du vent du véhicule.

3. Capteur de données d'air acoustique selon une quelconque revendication précédente,

dans lequel le circuit de commande est configuré pour déterminer un nombre Mach du flux d'air autour de l'extérieur du véhicule sur la base des composantes planes de la vitesse du flux d'air autour de l'extérieur du véhicule et de la vitesse du son dans le flux d'air autour de l'extérieur du véhicule selon l'équation suivante :

EP 3 693 746 B1

$$M = \frac{\sqrt{V_x^2 + V_y^2}}{C_0}$$

où $M$ est le nombre Mach du flux d'air autour de l'extérieur du véhicule ;

où $V_x$ est la composante plane du flux d'air autour de l'extérieur du véhicule dans une direction qui est parallèle à la ligne de référence d'angle du vent du véhicule ; et

où $V_y$ est la composante plane du flux d'air autour de l'extérieur du véhicule dans une direction qui est perpendiculaire à la ligne de référence d'angle du vent du véhicule.

4.  Capteur de données d'air acoustique selon une quelconque revendication précédente,

    dans lequel le circuit de commande est configuré pour déterminer l'angle de vent relatif du flux d'air autour de l'extérieur du véhicule sur la base des composantes planes de la vitesse du flux d'air autour de l'extérieur du véhicule selon l'équation suivante :

$$\alpha = \tan^{-1}\frac{V_y}{V_x}$$

où $\alpha$ est l'angle de vent relatif du flux d'air autour de l'extérieur du véhicule ;

où $V_x$ est la composante plane du flux d'air autour de l'extérieur du véhicule dans une direction qui est parallèle à la ligne de référence d'angle du vent du véhicule ; et

où $V_y$ est la composante plane du flux d'air autour de l'extérieur du véhicule dans une direction qui est perpendiculaire à la ligne de référence d'angle du vent du véhicule.

5.  Capteur de données d'air acoustique selon une quelconque revendication précédente,

    dans lequel le circuit de commande est configuré pour déterminer la température statique de l'air du flux d'air autour de l'extérieur du véhicule sur la base de la vitesse du son dans l'air autour de l'extérieur du véhicule selon l'équation suivante :

$$SAT = (kC_0)^2$$

où $SAT$ est la température statique de l'air du flux d'air autour de l'extérieur du véhicule ;

où $C_0$ est la vitesse du son dans le flux d'air autour de l'extérieur du véhicule ; et

où k est la constante 38,96695 $\text{nœuds}/\sqrt{°K}$ .

6.  Capteur de données d'air acoustique selon une quelconque revendication précédente,

    dans lequel chacun de la pluralité de récepteurs acoustiques est situé en aval de l'émetteur acoustique ; et/ou dans lequel le véhicule est un aéronef.

7.  Procédé comprenant :

    la transmission, par un émetteur acoustique d'un système de détection de données d'air acoustique situé sur un véhicule, d'un signal acoustique dans un flux d'air autour d'un extérieur du véhicule ;
    la réception du signal acoustique au niveau d'une pluralité de récepteurs acoustiques du capteur de données d'air acoustique, chacun de la pluralité de récepteurs acoustiques étant situé à un angle respectif par rapport à une ligne de référence d'angle du vent et à une distance respective de l'émetteur acoustique ;
    la détermination des temps de vol respectifs du signal acoustique depuis l'émetteur acoustique vers chacun de la pluralité de récepteurs acoustiques ;
    la détermination des vitesses de signal du signal acoustique vers chacun de la pluralité de récepteurs acoustiques sur la base des distances respectives et des temps de vol respectifs du signal acoustique entre l'émetteur acoustique et les récepteurs acoustiques ;
    la détermination des composantes planes d'une vitesse du flux d'air autour de l'extérieur du véhicule et d'une vitesse du son dans le flux d'air autour de l'extérieur du véhicule sur la base des vitesses de signal et des angles respectifs des récepteurs acoustiques provenant de l'émetteur acoustique ;

la détermination d'un ou plusieurs éléments parmi la vitesse effective de l'air et l'angle de vent relatif du flux d'air autour de l'extérieur du véhicule sur la base des composantes planes de la vitesse du flux d'air autour de l'extérieur du véhicule ; et

l'émission du ou des éléments parmi la vitesse effective de l'air et l'angle de vent relatif pour la commande opérationnelle du véhicule ; **caractérisé en ce que**

la détermination des composantes planes de la vitesse du flux d'air autour de l'extérieur du véhicule et la vitesse du son dans le flux d'air autour de l'extérieur du véhicule comprend la détermination des composantes planes et de la vitesse du son à l'aide d'une matrice d'incidence qui est basée sur les angles respectifs des récepteurs acoustiques provenant de l'émetteur acoustique et les vitesses de signal déterminées du signal acoustique à chacun de la pluralité de récepteurs acoustiques, et de préférence

dans lequel la matrice d'incidence prend la forme suivante :

$$\begin{bmatrix} \cos\theta_1 & \sin\theta_1 & 1 \\ \vdots & \vdots & \vdots \\ \cos\theta_n & \sin\theta_n & 1 \end{bmatrix}$$

où $\theta_1$ est l'angle entre la ligne de référence d'angle du vent et un premier de la pluralité de récepteurs acoustiques, et

où $\theta_n$ est l'angle entre la ligne de référence d'angle du vent et un $n^{ième}$ de la pluralité de récepteurs acoustiques, et de manière davantage préférée

dans lequel la détermination des composantes planes de l'écoulement d'air autour de l'extérieur du véhicule et de la vitesse du son dans l'écoulement d'air autour de l'extérieur du véhicule comprend la détermination des composantes planes et de la vitesse du son selon l'équation suivante :

$$\begin{bmatrix} V_x \\ V_y \\ C_0 \end{bmatrix} = M^+ \begin{bmatrix} V_1 \\ \vdots \\ V_n \end{bmatrix}$$

où $V_x$ est la composante plane du flux d'air autour de l'extérieur du véhicule dans une direction qui est parallèle à la ligne de référence d'angle du vent du véhicule ;

où $V_y$ est la composante plane du flux d'air autour de l'extérieur du véhicule dans une direction qui est perpendiculaire à la ligne de référence d'angle du vent du véhicule ;

où $C_0$ est la vitesse du son dans le flux d'air autour de l'extérieur du véhicule ;

où $M^+$ est un pseudo-inverse de Moore-Penrose de la matrice d'incidence ; et

où $V_1$ est la vitesse de signal du signal acoustique vers le premier de la pluralité de récepteurs acoustiques ; et

où $V_n$ est la vitesse de signal du signal acoustique vers le nième de la pluralité de récepteurs acoustiques.

8. Procédé selon la revendication 7,

dans lequel la détermination de la vitesse effective de l'air du flux d'air autour de l'extérieur du véhicule sur la base des composantes planes de la vitesse du flux d'air autour de l'extérieur du véhicule comprend la détermination de la vitesse effective de l'air selon l'équation suivante :

$$TAS = \sqrt{V_x^2 + V_y^2}$$

où $TAS$ est la vitesse effective de l'air du flux d'air autour de l'extérieur du véhicule ;

où $V_x$ est la composante plane du flux d'air autour de l'extérieur du véhicule dans une direction qui est parallèle à la ligne de référence d'angle du vent du véhicule ; et

où $V_y$ est la composante plane du flux d'air autour de l'extérieur du véhicule dans une direction qui est perpendiculaire à la ligne de référence d'angle du vent du véhicule.

**9.** Procédé selon l'une quelconque des revendications 7 et 8, comprenant en outre :

la détermination d'un nombre Mach du flux d'air autour de l'extérieur du véhicule sur la base des composantes planes de la vitesse du flux d'air autour de l'extérieur du véhicule et de la vitesse du son dans le flux d'air autour de l'extérieur du véhicule selon l'équation suivante :

$$M = \frac{\sqrt{V_x^2 + V_y^2}}{C_0}$$

où $M$ est le nombre Mach du flux d'air autour de l'extérieur du véhicule ;
où $V_x$ est la composante plane du flux d'air autour de l'extérieur du véhicule dans une direction qui est parallèle à la ligne de référence d'angle du vent du véhicule ; et
où $V_y$ est la composante plane du flux d'air autour de l'extérieur du véhicule dans une direction qui est perpendiculaire à la ligne de référence d'angle du vent du véhicule.

**10.** Procédé selon l'une quelconque des revendications 7 à 9, dans lequel la détermination de l'angle de vent relatif du flux d'air autour de l'extérieur du véhicule sur la base des composantes planes de la vitesse du flux d'air autour de l'extérieur du véhicule comprend la détermination de l'angle de vent relatif selon l'équation suivante :

$$\alpha = \tan^{-1} \frac{V_y}{V_X}$$

où $\alpha$ est l'angle de vent relatif du flux d'air autour de l'extérieur du véhicule ;
où $V_x$ est la composante plane du flux d'air autour de l'extérieur du véhicule dans une direction qui est parallèle à la ligne de référence d'angle du vent du véhicule ; et
où $V_y$ est la composante plane du flux d'air autour de l'extérieur du véhicule dans une direction qui est perpendiculaire à la ligne de référence d'angle du vent du véhicule.

**11.** Procédé selon l'une quelconque des revendications 7 à 10, comprenant en outre :

la détermination de la température statique de l'air du flux d'air autour de l'extérieur du véhicule sur la base de la vitesse du son dans l'air autour de l'extérieur du véhicule selon l'équation suivante :

$$SAT = (kC_0)^2$$

où $SAT$ est la température statique de l'air du flux d'air autour de l'extérieur du véhicule ;
où $C_0$ est la vitesse du son dans le flux d'air autour de l'extérieur du véhicule ; et
où k est la constante 38,96695 $\mathrm{nœuds}/\sqrt{°K}$.

**12.** Procédé selon l'une quelconque des revendications 7 à 11, dans lequel chacun de la pluralité de récepteurs acoustiques est situé en aval de l'émetteur acoustique.

Fig. 1

Fig. 2

REFERENCES CITED IN THE DESCRIPTION

**Patent documents cited in the description**

- US 3222926 A
- US 10101443 B